# EUROPEAN PATENT APPLICATION

(11) **EP 4 029 869 A1**
(43) Date of publication of application: **20.07.2022**
(21) Application number: 21151930.1
(22) Date of filing: 15.01.2021
(51) Int. Cl.: C07F 3/00, G01N 23/00

(54) **SOLVATED CRYSTALLINE POLYNUCLEAR METAL COMPLEX SOLVATED WITH A MIXTURE OF NON-POLAR AND POLAR SOLVENTS, SUCH SOLVATED CRYSTALLINE POLYNUCLEAR METAL COMPLEX INCLUDING A GUEST COMPOUND ANALYTE AND ITS USE IN A METHOD FOR DETERMINING MOLECULAR STRUCTURE OF THE GUEST COMPOUND ANALYTE**

(71) Applicant: Merck Patent GmbH, 64293 Darmstadt (DE)
(72) Inventor: KUEHN, Clemens, 64293 Darmstadt (DE)
(74) Representative: Merck Serono S.A. Intellectual Property

(57) **Abstract**

The present invention is directed to solvated crystalline polynuclear metal complexes which solvation is with a polar solvent or a mixture of polar and non-polar solvent. These polar solvated crystalline metal complexes of the present invention can absorb an analyte guest compound, including an polar analyte guest compound, to form a crystal structure analysis sample. The molecular structure of the analyte guest compound can be determined by X-ray crystallography using the crystal structure analysis sample obtained with such solvated crystalline polynuclear metal complexes.

## Description

### Field of the Invention

The present invention relates to solvated crystalline polynuclear metal complexes which are solvated using a mixture of non-polar and polar solvents and particularly those solvated crystalline polynuclear metal complexes which include a guest compound analyte. Such solvated crystalline polynuclear complexes are useful in crystal structure analysis methods to determine the molecular structure of the guest compound analyte present in the such crystalline polynuclear metal complex. The present invention also relates to the use of such crystalline polynuclear complexes in methods for determining the molecular structure of a guest compound analyte through crystal structure analysis.

### Background

X-ray single crystal structure analysis has been known as a method for determining the molecular structure of an organic compound. The molecular structure of an organic compound can be accurately determined using X-ray single crystal structure analysis when it is possible to prepare a high-quality single crystal.

However, when the amount of organic compound is very small, and it is impossible to obtain a sufficient amount of single crystal, it is difficult to employ X-ray single crystal structure analysis for determining the molecular structure of the organic compound. It is difficult to prepare a single crystal when the organic compound for which the molecular structure is to be determined is liquid at about room temperature (i.e., when the melting point of the organic compound is equal to or lower than room temperature). This difficulty may be for example as a result of the inability of the compound in forming crystals at room temperature. Also, the difficulty can simply be that it is extremely difficult to obtain sufficient quantities of appropriate purity of the compound analyte. The use of a crystalline polynuclear complex, which is porous, acts as a framework to support the compound analyte in an ordered manner.

The use of crystalline polynuclear metal complexes that can incorporate a guest compound analyte in an ordered manner has enabled the use of X-ray single crystal structure analysis even in instances wherein it is difficult to obtain a sufficient amount of a single crystal of the analyte. Such method of determining the molecular structure of the analyte compound is known as the crystalline sponge method wherein the crystalline polynuclear metal complex is considered the crystalline sponge. This emerging technology in X-ray crystallography makes it possible to obtain the crystal structure of non-crystalline (or hard-to-crystallize) compounds, without crystallization, on a microgram scale. The use of crystalline polynuclear metal complexes or crystalline sponges for facilitated structure elucidation of small molecules is described in for example WO 2014/038220 and WO 2016/143872 and in for example Y. Inokuma et al., Nature 2013, 495, 461-466 (Corrigendum: Nature 2013, 501) and M. Hoshino, et al., IUCrJ, 2016, 3, 139-151. This method uses a porous crystalline polynuclear metal complex, for example [(ZnX₂)₃•(tpt)₂]ₙ (wherein X = CI or I; and tpt = 2,4,6-tris(4-pyridyl)-1,3,5-triazine) as a crystalline sponge that can absorb small to medium sized organic molecules, orient them uniformly in their pores, and make them observable by conventional single crystal X-ray crystallography.

In order to prepare a crystalline polynuclear metal complex which envelops a guest compound analyte the crystalline polynuclear metal complex is first prepared in an appropriate solvent for the crystallization of the crystalline polynuclear metal complex. The obtained crystalline polynuclear metal complex can be used immediately in a subsequent step to introduce the guest compound analyte or can be stored for later use. Storage of the crystalline polynuclear metal complex is generally in an appropriate non-polar storage solvent.

Although these methods using crystalline polynuclear metal complexes (crystalline sponges) have been successful for those analytes which are dissolvable in the non-polar solvents used to prepare the crystalline polynuclear metal complex, many analytes do not dissolve well in the non-polar solvents used (e.g. cyclohexane, pentane or chloroform). Moreover, many polar solvents capable of dissolving the analyte cannot be mixed as well (or only up to certain amounts) with the non-polar solvent used in storing the customary used crystalline polynuclear metal complexes.

Currently, the most widely used crystalline sponge material is the chloride based crystalline polynuclear metal complex [(ZnCl₂)₃(tpt)₂]ₙ. However, polar solvents have a tendency to destroy the crystals of such crystalline polynuclear metal complexes as customary used, thereby rendering them unusable. Therefore, the non-polar solvent of the crystalline polynuclear metal complex as used in such method to introduce an analyte cannot completely be exchanged against a polar solvent.

As a result, the structure elucidation of highly polar analytes cannot be addressed by the crystalline sponge technology using the currently customary methods and crystalline sponges. There is a need for crystalline sponges and a method to use crystalline sponges which would allow the crystalline sponge technology to be used with highly polar analytes for structure elucidation.

### Summary of the Invention

The current invention provides a solution to the above described limitations on the use of the crystalline polynuclear metal complexes, particularly those using zinc-halogen based crystalline polynuclear metal complex such as for example [(ZnCl₂)₃(tpt)₂]ₙ and [(Znl₂)₃(tpt)₂]ₙ. The present invention provides for a solvated crystalline polynuclear metal complex which is solvated with a mixture of polar and non-polar solvents and is exhibiting the same metal-organic framework characteristics. The presence of a polar solvent in the solvation of the crystalline polynuclear complex allows for the use of polar analytes in the crystalline sponge method. Thus, the polar solvated material of the present invention is usable in crystalline sponge X-ray crystallography methods when desiring the perform structure elucidation with polar analytes and enables the use of soaking conditions for migrating an (polar) analyte into the crystalline polynuclear metal complex.

In one embodiment the present invention provides a solvated crystalline polynuclear metal complex, wherein the solvated polynuclear metal complex is represented by [[M(X)₂]₃(L)₂]ₙ · (Sol)ₚ wherein
M is a metal ion,
X is a monovalent anion,
L is a tridentate ligand represented by formula (1), 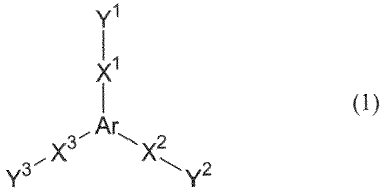
wherein Ar is a substituted or unsubstituted trivalent aromatic group, X¹ to X³ are independently a divalent organic group, or a single bond that directly bonds Ar and Y¹, Y², or Y³, and Y¹ to Y³ are independently a monovalent organic group having a coordinating moiety,
n is an arbitrary natural number, and
p is an arbitrary number,
wherein the amount of solvation of the polynuclear metal complex represented by the value p is such that p has a value between 0.5 to 6 and wherein solvent of solvation is a polar solvent or mixture of polar and non-polar solvents.

In another embodiment there is provided a method of preparing a solvated crystalline polynuclear metal complex solvated with a polar solvent or a mixture of polar and non-polar solvent comprising the steps of:
a) layering a volume of methanol onto a solution of ligand L in a mixture of an organic (nonpolar) solvent and a lower alcohol,
b) layering onto the volume of the lower alcohol of step a) a solution of MX₂ in a lower alcohol,
c) obtaining a crystalline material after maintaining the solution obtained in step b) for a period of 1 to 10 days, preferably 3 to 7 days at a temperature of 15°C to 40°C, preferably at 20°C to 30°C, and
d) washing the crystalline material of step c) with an polar solvent or mixture of non-polar and polar solvent.
As used herein the term lower alcohol refers to an alcohol with 1 to 6, preferably 1 to 4 carbon atoms.

In another embodiment there is provided a method of preparing a solvated crystalline polynuclear metal complex solvated with a polar solvent or a mixture of polar and non-polar solvent comprising: washing a non-polar solvent solvated crystalline polynuclear metal complex with a polar solvent or with a mixture of polar and non-polar solvent.

In yet another embodiment there is provided method of producing a crystal structure analysis sample, comprising bringing a solvated crystalline polynuclear metal complex of the present invention into contact with an analysis target compound (analyte) containing solution to arrange molecules of an analyte in the pores and/or voids of the hydrated crystalline polynuclear metal complex in an ordered manner. The analyte includes polar analysis target compounds. This method comprises bringing into contact;
a) a single crystal polynuclear metal complex represented by [[M(X)₂]₃(L)₂]ₙ in a solvent which is a polar solvent or a mixture of polar and a non-polar organic solvent, wherein
   M is a metal ion,
   X is a monovalent anion,
   L is a tridentate ligand represented by formula (1), 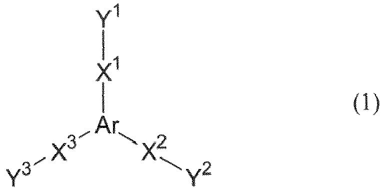
      wherein Ar is a substituted or unsubstituted trivalent aromatic group, X¹ to X³ are independently a divalent organic group, or a single bond that directly bonds Ar and Y¹, Y², or Y³, and Y¹ to Y³ are independently a monovalent organic group having a coordinating moiety, and
      n is an arbitrary natural number,
      with
b) an analysis target compound (analyte) containing solution,
to arrange molecules of an analyte in the pores and/or voids of the single crystal polynuclear metal complex in an ordered manner.

In another embodiment of the present invention there is provided a method for determining a molecular structure of an analysis target compound, including a polar analysis target compound, comprising performing crystal structure analysis using a crystal structure analysis sample obtained by a method for producing the crystal structure analysis sample using a solvated crystalline polynuclear metal complex of the present invention.

### Detailed Description of the Invention

A solvated crystalline polynuclear metal complex which is solvated with a polar or mixture of polar and non-polar solvents, and its use in single crystal X-ray crystallography for the elucidation of the molecular structure of an analyte guest compound, as well as methods of preparing such solvated crystalline polynuclear metal complex are described in detail below. These solvated crystalline polynuclear metal complexes can be used in methods for the structure elucidation of polar analytes or those analytes that require a polar solvent using the crystalline sponge technology. The crystalline sponge technology makes use of crystalline polynuclear metal complexes as a crystalline molecular sponge for an analyte to arrange such analyte in an ordered manner. A complex so formed comprising the analyte in a crystalline polynuclear metal complex allows for X-ray crystallographic analysis of the analyte.

As such the solvated crystalline polynuclear metal complex used in connection with the embodiments of the invention has a three-dimensional network structure that includes a ligand having coordinating moieties, and a metal ion that serves as a center metal. The term "three-dimensional network structure" used herein refers to a network-like structure in which a structural unit formed by a ligand (i.e., a ligand having two or more coordinating moieties and an additional monodentate ligand) and a metal ion that is bonded to the ligand is repeatedly arranged three-dimensionally.

The three-dimensional network structure results in the crystalline polynuclear metal complex to have a porous structure. Such porous structure enables the capturing of an analyte guest compound within the porous structure of a crystalline polynuclear metal complex. As such the crystalline polynuclear metal complex acts as a "sponge" for the analyte guest compound. Introduction of such analyte guest compound in a crystalline complex of the present invention allows for the organized arrangement of the analyte guest compound within the complex molecule. This organized arrangement of the analyte guest compound enables the use of single crystal X-ray crystallography to elucidate the molecular structure of the analyte guest compound. Therefore, the single crystal X-ray crystallography method using such crystalline polynuclear metal complexes is often referred to as the Crystalline Sponge (CS) X-ray crystallography method.

The use of the crystalline sponge technology for polar analytes or analytes which require a polar solvent for dissolution has been largely impossible. Currently used crystalline polynuclear molecular complexes are prepared and stored in non-polar solvents considering that such conditions in non-polar solvents are required for stability and quality of the polynuclear metal complex. Introduction of a polar analyte or analyte which requires a polar solvent for dissolution into the porous crystalline polynuclear metal complex is compromised by the solvation with non-polar solvents such as for example n-hexane and cyclohexane.

The present invention described herein is directed to solvated crystalline polynuclear metal complexes whose non-polar solvent has been fully or partially been exchanged against polar solvents or mixtures of polar and non-polar solvents, allowing the use of higher amounts of more polar solvents to be used to dissolve the analyte and introduce such polar analyte with the porous structure of the crystalline polynuclear metal complex. In addition, the higher polarity of the crystalline polynuclear metal complex (crystalline sponge) solvent allows that while introducing the analyte into the crystalline sponge structure the analyte remains in solution rather than precipitating.

The solvated crystalline polynuclear metal complex of the present invention which is solvated with a polar solvent or mixture of a polar and non-polar solvent, includes a coordinating metal complex and is represented by [[M(X)₂]₃(L)₂]ₙ · (Sol)ₚ wherein
M is a metal ion,
X is a monovalent anion,
L is a tridentate ligand represented by formula (1), 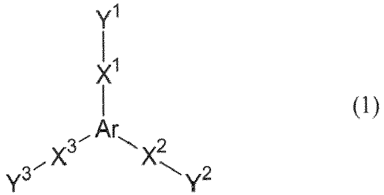
wherein Ar is a substituted or unsubstituted trivalent aromatic group, X¹ to X³ are independently a divalent organic group, or a single bond that directly bonds Ar and Y¹, Y², or Y³, and Y¹ to Y³ are independently a monovalent organic group having a coordinating moiety,
n is an arbitrary natural number, and
p is an arbitrary number,
wherein the amount of solvation of the polynuclear metal complex represented by the value p is such that p has a value between 0.5 to 6 and wherein solvent of solvation is a polar solvent or mixture of polar and non-polar solvents.

The tridentate aromatic ligand Ar in the formula (1) is a trivalent aromatic group. The number of carbon atoms of Ar is normally 3 to 22, preferably 3 to 13, and more preferably 3 to 6. Examples of Ar include a trivalent aromatic group having a monocyclic structure that consists of one 6-membered aromatic ring, and a trivalent aromatic group having a fused ring structure in which three 6-membered aromatic rings are fused.

Examples of the trivalent aromatic group having a monocyclic structure that consists of one 6-membered aromatic ring include the groups respectively represented by the following formulas (2a) to (2d). Examples of the trivalent aromatic group having a fused ring structure in which three 6-membered aromatic rings are fused, include the group represented by the following formula (2e). It is noted that"*" in the formulas (2a) to (2e) indicates the positions at which X¹ to X³ are bonded.

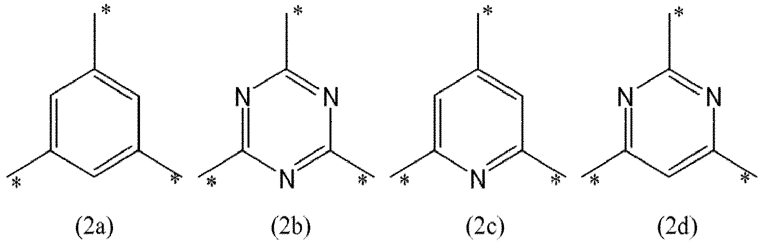

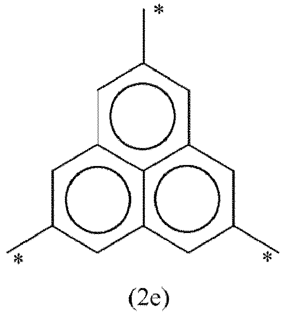

The aromatic groups represented by the formulas (2a) and (2c) to (2e) may be substituted with a substituent at an arbitrary position. Examples of a substituent include an alkyl group such as a methyl group, an ethyl group, an isopropyl group, an n-propyl group, and at-butyl group; an alkoxy group such as a methoxy group, an ethoxy group, an n-propoxy group, and an n-butoxy group; a halogen atom such as a fluorine atom, a chlorine atom, and a bromine atom; and the like. Ar is preferably the aromatic group represented by the formula (2a) or (2b), and particularly preferably the aromatic group represented by the formula (2b).

X¹ to X³ are independently a divalent organic group, or a single bond that directly bonds Ar and Y¹, Y², or Y³. The divalent organic group that may be represented by X¹ to X³ is preferably a group that can form a pi electron conjugated system together with Ar. When the divalent organic group that may be represented by X¹ to X³ forms a pi electron conjugated system, the planarity of the tridentate ligand represented by the formula (1) is improved, and a strong three-dimensional network structure is easily formed. The number of carbon atoms of the divalent organic group is preferably 2 to 18, more preferably 2 to 12, and still more preferably 2 to 6.

Y¹ to Y³ are independently a monovalent organic group having a coordinating moiety. The organic group represented by Y¹ to Y³ is preferably a group that can form a pi electron conjugated system together with Ar and X¹ to X³. When the organic group represented by Y¹ to Y³ forms a pi electron conjugated system, the planarity of the tridentate ligand represented by the formula (1) is improved, and a strong three-dimensional network structure is easily formed.

The number of carbon atoms of the organic group represented by Y¹ to Y³ is preferably 5 to 11, and more preferably 5 to 7. Examples of the organic group represented by Y¹ to Y³ include the organic groups respectively represented by the following formulas (3a) to (3f). It is noted that"*" in the formulas (3a) to (3f) indicates the position at which X¹, _{X}², or _{X}³ is bonded.

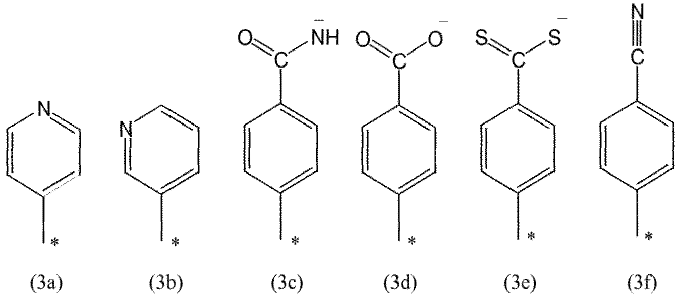

The organic groups represented by the formulas (3a) to (3f) may be substituted with a substituent at an arbitrary position. Examples of the substituent include those mentioned above in connection with Ar. The group represented by the formula (3a) is particularly preferable as Y¹ to Y³.

The size of the pores and the like of the polynuclear-metal complex can be adjusted by appropriately selecting Ar, X¹ to X³, and Y¹ to Y³ in the tridentate ligand represented by the formula (1). The method according to one embodiment of the invention makes it possible to efficiently obtain a stable single crystal of a polynuclear metal complex that has pores and the like having a size sufficient to include an organic compound for which the molecular structure is to be determined.

It is preferable that the tridentate ligand represented by the formula (1) have high planarity and high symmetry and have a structure in which a pi-conjugated system extends over the entire ligand, since a strong three-dimensional network structure is easily formed. Examples of such a tridentate ligand include the ligands respectively represented by the following formulas (4a) to (4f).

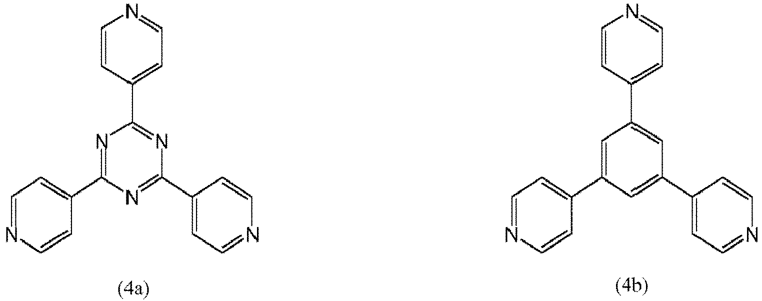

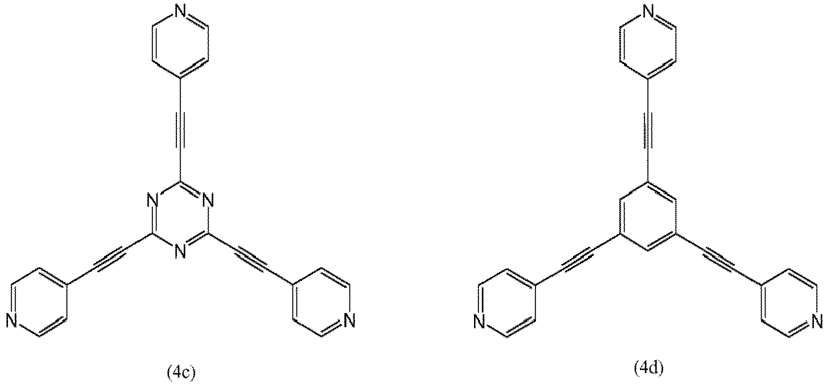

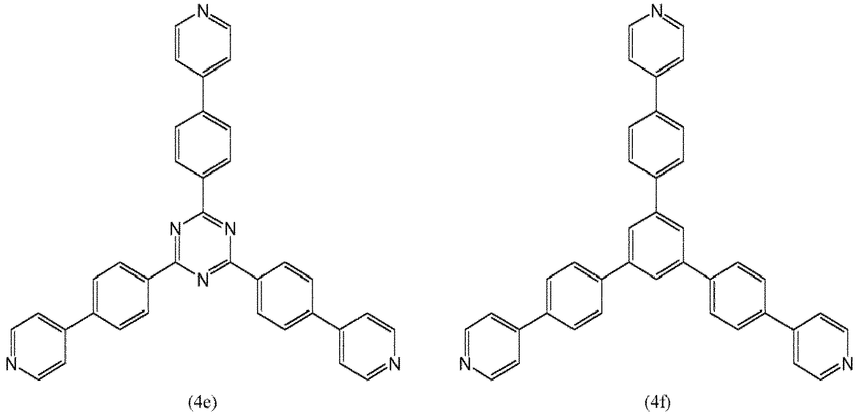

Among these, 2,4,6-tris(4-pyridyl)-1,3,5-triazine (TPT) represented by the formula (4a) is particularly preferable as the tridentate ligand represented by the formula (1).

The metal ion that serves as the center metal is not particularly limited as long as the metal ion forms a coordination bond together with the multidentate ligand to form the three-dimensional network structure. A known metal ion may be used as the metal ion that serves as the center metal. It is preferable to use an ion of a metal among the metals that belong to Groups 8 to 12 in the periodic table, such as an iron ion, a cobalt ion, a nickel ion, a copper ion, a zinc ion, or a silver ion, and more preferably an ion of a divalent metal among the metals that belong to Groups 8 to 12 in the periodic table. It is particularly preferable to use a zinc(II) ion or a cobalt(II) ion, since a polynuclear-metal complex having large pores and the like can be easily obtained. Even more preferably is the use of zinc(II) ion.

The crystalline polynuclear metal complex used in connection with the embodiments of the invention is normally stabilized due to coordination of a monodentate ligand that serves as a counter ion in addition to the neutral multidentate ligand. Examples of the monodentate ligand include a monovalent anion such as a halogen ion such as a chloride ion (Cl⁻), a bromide ion (Br) and an iodide ion (I⁻), and a thiocyanate ion (SCN⁻). Preferably the monovalent anion is a chloride ion (Cl⁻).

The crystalline polynuclear metal complex used in connection with the embodiments of the invention has the three-dimensional network structure that is formed by the metal ion and the tridentate ligand that is coordinated to the metal ion, and has pores and the like which may be three-dimensionally arranged in the three-dimensional network structure in an ordered manner.

The expression "the pores and the like that are three-dimensionally arranged in the three-dimensional network structure in an ordered manner" means that the pores and the like are arranged in the three-dimensional network structure in an ordered manner to such an extent that the pores and the like can be observed by X-ray single crystal structure analysis. The three-dimensional network structure is not particularly limited as long as the three-dimensional network structure has the above structural features, and the pores and the like have a size sufficient to include the analyte guest compound, often an organic compound, for which the molecular structure is to be determined.

However, the conventional method of introducing the analyte guest compound uses crystalline polynuclear metal complexes which include a non-polar solvent. As a result, the crystalline sponge technology encounters difficulties when attempting to introduce a polar analyte into the crystalline sponge as the analyte guest compound. The same applies for analyte guest compounds which require a polar environment (a polar solvent) for its dissolution. The solvated crystalline polynuclear metal complex of the present invention is solvated with a polar solvent or a mixture of polar and non-polar solvents wherein the amount of solvation of the crystalline polynuclear metal complex is from 0.5 to 6 molecules of polar solvate or mixture of polar and non-polar solvate per unit of the polynuclear metal complex. Preferable the amount of solvate is between 0.5 and 4 molecules of the solvate, even more preferably between 0.5 and 2 molecules of the solvate, even more preferably the amount of solvation is between 1 and 2 molecules of the solvate per unit of the polynuclear metal complex.

An appropriate polar solvent can be selected according to the characteristics of the target analyte for which the crystalline sponge is to be used. As such, the selected polar solvent may be the most appropriate solvent for the analyte to dissolve. However, the selected polar solvent or mixture of polar and non-polar solvent should not compromise the stability and quality of the crystalline sponge. In one such embodiment the polar solvent of the present invention is selected from acetone, tetrahydrofuran (THF), dichloromethane (DCM), a mixture of acetone and a non-polar organic solvent, a mixture of THF and a non-polar organic solvent and a mixture of DCM and a non-polar organic solvent. Where a mixture of polar and non-polar solvent is used as solvate the mixture in one such embodiment is a mixture of 30-80 volume % of polar solvent mixed with 70-20 volume % of a non-polar organic solvent. In one embodiment the mixture is a mixture of 30-70 volume % of polar solvent mixed with 70-30 volume % of a non-polar organic solvent. In one embodiment the mixture of polar and non-polar solvent used as solvate is a mixture of 30-70 volume % of THF, acetone or DCM mixed with 70-30 volume % of a non-polar organic solvent. In another embodiment the mixture is a mixture of 40-60 volume % of THF, acetone or DCM mixed with 60-40 volume % of a non-polar organic solvent. In one embodiment the solvent is a mixture of 80 volume % polar solvent and 20 volume % non-polar organic solvent, preferable in such embodiment the polar solvent is THF or acetone and the non-polar organic solvent is cyclohexane or n-hexane. In yet another embodiment the solvent is a mixture of 50 volume % of THF, acetone or DCM mixed with 50 volume % of a non-polar organic solvent. The non-polar (organic) solvent can be any suitable non-polar solvent including cyclohexane and n-hexane.

The solvated crystalline polynuclear metal complex wherein the solvate is a polar solvent or a mixture of polar and non-polar solvent allows for the introduction into the crystalline sponge porous environment to be introduced polar analytes. In addition, such solvated crystalline polynuclear metal complex of the present invention wherein the solvation is with a polar solvent or a mixture of polar and non-polar solvents can also be used wherein such solvated crystalline sponge is used in a preparation method to introduce an analyte which analyte is dissolved in a polar solvent. As a result of the present invention, the crystalline sponge method can be expanded to introduce polar analytes or analytes requiring dissolution in a polar solvent, neither of which could be successfully accomplished using the conventional crystalline polynuclear metal complexes.

In another embodiment the solvated crystalline polynuclear metal complex is produced by a method comprising the steps of: a) layering a volume of a lower alcohol such as for example methanol onto a solution of ligand L in a mixture of an organic (nonpolar) solvent, for example CHCl₃ or cyclohexane or n-hexane, and the lower alcohol such as for example methanol, b) layering onto the volume of the lower alcohol of step a) a solution of MX₂ in a lower alcohol, c) obtaining a crystalline material after maintaining the solution obtained in step b) for a period of about 1 to 10 days, preferably of about 3 to 7 days, at a temperature of about 15°C to 40°C, preferably at about 20°C to 30°C, and d) washing the crystalline material of step c) with a polar solvent or mixture of non-polar and polar solvent. As used herein the term lower alcohol refers to an alcohol with 1 to 6, preferably 1 to 4 carbon atoms. In a preferred embodiment the lower alcohol is methanol or ethanol, even more preferred is wherein the lower alcohol is methanol. Preferably the polar solvent as used herein is THF, acetone or DCM or a mixture of 30-80 volume % of the polar solvent and 70-20 volume % of a non-polar solvent, preferably 30-70 volume % polar solvent and 70-30 volume % of a non-polar solvent. Even more preferred is a polar solvent which is a mixture of a mixture of 30-70 volume % of THF, acetone or DCM mixed with 70-30 volume % of a non-polar organic solvent. In another embodiment the polar/non-polar solvent mixture is a mixture of 40-60 volume % of THF, acetone or DCM mixed with 60-40 volume % of a non-polar organic solvent. In a preferred embodiment the solvent is a mixture of 80 volume % of a polar solvent and 20 volume % of a non-polar solvent, preferably wherein the polar solvent is TFH or acetone and the non-polar solvent is cyclohexane or n-hexane. In an alternative preferred embodiment, the solvent is a mixture of 50 volume % of THF, acetone or DCM mixed with 50 volume % of a non-polar organic solvent. The non-polar (organic) solvent can be any suitable lipophilic non-polar solvent including cyclohexane and n-hexane.

In yet another embodiment the method of preparing a solvated crystalline polynuclear metal complex solvated with a polar solvent or a mixture of polar and non-polar solvent comprises washing a non-polar solvent solvated crystalline polynuclear metal complex with a polar solvent or with a mixture of polar and non-polar solvent. As in the method above preferably the polar solvent as used herein is THF, acetone or DCM or a mixture of 30-80 volume % of the polar solvent and 70-20 volume % of a non-polar solvent. In one embodiment the mixture is a mixture of 30-70 volume % of polar solvent mixed with 70-30 volume % of a non-polar organic solvent. Even more preferred is a polar solvent which is a mixture of a mixture of 30-70 volume % of THF, acetone or DCM mixed with 70-30 volume % of a non-polar organic solvent. In another embodiment the polar/non-polar solvent mixture is a mixture of 40-60 volume % of THF, acetone or DCM mixed with 60-40 volume % of a non-polar organic solvent. In a preferred embodiment the solvent is a mixture of 80 volume % of a polar solvent and 20 volume % of a non-polar solvent, preferably wherein the polar solvent is TFH or acetone and the non-polar solvent is cyclohexane or n-hexane. In an alternative preferred embodiment, the solvent is a mixture of 50 volume % of THF, acetone or DCM mixed with 50 volume % of a non-polar organic solvent. The non-polar (organic) solvent can be any suitable lipophilic non-polar solvent including cyclohexane and n-hexane

In yet another embodiment the solvate crystalline polynuclear metal complex is one obtained by either of the two methods described above.

In a preferred embodiment of the present invention, the solvated crystalline polynuclear metal complex includes Zn(II) as the metal ion. In such preferred embodiment the monovalent anion is either chloride (CI⁻) or Iodide (I⁻). In such solvated crystalline polynuclear metal complex the preferred ligand L is 2,4,6-tris(4-pyridyl)-1,3,5-triazine (TPT). Further, in such preferred embodiments the solvate is a 1:1 mixture of polar solvent to non-polar solvent wherein the polar solvent is acetone, THF or DCM and the non-polar solvent is cyclohexane or n-hexane. As such in solvated form the crystalline polynuclear metal complex in a preferred embodiment is represented by [(ZnX₂)₃-(tpt)₂]ₙ . (Sol)ₚ, wherein X is a halogen selected from chloride (CI), iodide (I) and bromide (Br), n is an arbitrary natural number and p is an arbitrary number between 0.5 and 6. Preferably, X is a halogen selected from chloride (CI) and iodide (I). More preferably the solvated polynuclear metal complex is [(ZnCl₂)₃(tpt)₂]ₙ · (Sol)ₚ or [(Znl₂)₃(tpt)₂]ₙ · (Sol)ₚ, wherein Sol is THF/cyclohexane (1:1), THF/n-hexane (1:1), acetone/cyclohexane (1:1), acetone/n-hexane (1:1), DCM/cyclohexane (1:1) or DCM/n-hexane (1:1). In some such preferred embodiments the solvated crystalline polynuclear metal complex is [(ZnCl₂)₃(tpt)₂]ₙ · (SOl)₂.

The solvated crystalline polynuclear metal complexes of the present invention can be used in any known method for use in the sponge method of single crystal X-ray crystallography to determine the molecular structure of an analysis target compound, including a polar analysis target compound. In such sponge method an analysis target compound is first introduced into the solvated crystalline polynuclear metal complex of the present invention to obtain a crystal structure analysis sample. Such crystal structure analysis sample may be obtained by a method comprising bringing the solvated single crystal polynuclear metal complex of the present invention into contact with an analysis target compound (analyte) containing solution to absorb molecules of an analyte in the pores and/or voids of the solvated single crystal polynuclear metal complex. Considering that the pores in the crystalline polynuclear metal complex of the present invention are regularly and ordered such analyte is absorbed in an ordered manner in order to be useful a method to determine the molecular structure by X-ray crystallography.

As such, in another embodiment of the present invention there is provided a method for determining a molecular structure of an analysis target compound, comprising performing crystal structure analysis using a crystal structure analysis sample obtained by such method for producing the crystal structure analysis sample as in the present invention.

### Examples

### Example 1: Crystallization of ZnCl₂-tpt and solvent exchange mixture of 80% THF and 20% cyclohexane or n-hexane.

21.27 mg tris(4-pyridyl)-1,3,5-triazine (tpt) is dissolved in a mixture of 16 mL CHC13 and 0.833 mL methanol. 18.42 mg of ZnCl₂ are dissolved in 2.3 mL methanol. A test tube is filled with 5 mL of the tpt solution. 400 µL MeOH is carefully layered on top of the tpt solution. Finally, 600 µL of a ZnCl₂ solution is carefully layered on top of the methanol layer while avoiding instant mixing of the solutions. The so prepared layered solutions are kept in a closed environment at ambient temperature for ca. 3 days.

After three days, crystals of block to short needle shape and a size of 100 - 300 µm are harvested in CHCl₃.

CHC13 from harvested crystals was replaced with a mixture of CHCl₃ and cyclohexane (9:1) and left for a period of ca. 8 hours. Afterwards the 9:1 mixture is replaced with a 8:2 mixture of CHCl₃ and cyclohexane and left for at least another 8 hours. The procedure is repeated until the harvested crystals are stored in 100% cyclohexane.

Cyclohexane from those crystals was replaced with a mixture of cyclohexane and THF (9:1) and left for a period of ca. 8 hours. Afterwards the 9:1 mixture is replaced with a 8:2 mixture of cyclohexane and THF and left for at least another 8 hours. The procedure is repeated until the harvested crystals are stored in 80% THF.

The same process was repeated for crystalline sponges solvated with n-hexane and THF. In this process n-hexane was used instead of cyclohexane.

In both process stable crystalline sponges were obtained of sufficient size to be used in the crystalline sponge method for introducing an analyte compound.

### Example 2: Crystallization of ZnCl₂-tpt and solvent exchange mixture of 80% acetone and 20% cyclohexane or n-hexane.

21.27 mg tris(4-pyridyl)-1,3,5-triazine (tpt) is dissolved in a mixture of 16 mL CHC13 and 0.833 mL methanol. 18.42 mg of ZnCl₂ are dissolved in 2.3 mL methanol. A test tube is filled with 5 mL of the tpt solution. 400 µL MeOH is carefully layered on top of the tpt solution. Finally, 600 µL of a ZnCl₂ solution is carefully layered on top of the methanol layer while avoiding instant mixing of the solutions. The so prepared layered solutions are kept in a closed environment at ambient temperature for ca. 3 days.

After three days, crystals of block to short needle shape and a size of 100 - 300 µm are harvested in CHCl₃.

CHC13 from harvested crystals was replaced with a mixture of CHCl₃ and cyclohexane (9:1) and left for a period of ca. 8 hours. Afterwards the 9:1 mixture is replaced with a 8:2 mixture of CHCl₃ and cyclohexane and left for at least another 8 hours. The procedure is repeated until the harvested crystals are stored in 100% cyclohexane.

Cyclohexane from those crystals was replaced with a mixture of cyclohexane and acetone (9:1) and left for a period of ca. 8 hours. Afterwards the 9:1 mixture is replaced with a 8:2 mixture of cyclohexane and acetone and left for at least another 8 hours. The procedure is repeated until the harvested crystals are stored in 80% acetone.

The same process was repeated for crystalline sponges solvated with n-hexane and acetone. In this process n-hexane was used instead of cyclohexane.

In both process stable crystalline sponges were obtained of sufficient size to be used in the crystalline sponge method for introducing an analyte compound.

### Example 3: Crystallization of ZnCl₂-tpt and solvent exchange to 100% DCM

21.27 mg tris(4-pyridyl)-1,3,5-triazine (tpt) is dissolved in a mixture of 16 mL CHCl₃ and 0.833 mL methanol. 18.42 mg of ZnCl₂ are dissolved in 2.3 mL methanol. A test tube is filled with 5 mL of the tpt solution. 400 µL MeOH is carefully layered on top of the tpt solution. Finally, 600 µL of a ZnCl₂ solution is carefully layered on top of the methanol layer while avoiding instant mixing of the solutions. The so prepared layered solutions are kept in a closed environment at ambient temperature for ca. 3 days.

After three days, crystals of block to short needle shape and a size of 100 - 300 µm are harvested in CHCl₃.

CHCl₃ from harvested crystals was replaced with a mixture of CHCl₃ and cyclohexane (9:1) and left for a period of ca. 8 hours. Afterwards the 9:1 mixture is replaced with a 8:2 mixture of CHCl₃ and cyclohexane and left for at least another 8 hours. The procedure is repeated until the harvested crystals are stored in 100% cyclohexane. The obtained crystals of [(ZnCl₂)₃(tpt)₂]ₙ solvated with Cyclohexane were harvested and stored under the same conditions (i.e. in pure cyclohexane).

Cyclohexane from those crystals was replaced with a mixture of cyclohexane and DCM (9:1) and left for a period of ca. 8 hours. Afterwards the 9:1 mixture is replaced with a 8:2 mixture of cyclohexane and DCM and left for at least another 8 hours. The procedure is repeated until the harvested crystals are stored in 100% DCM.

The same process was repeated for crystalline sponges solvated with n-hexane and DCM. In this process n-hexane was used instead of cyclohexane.

In both process stable crystalline sponges were obtained of sufficient size to be used in the crystalline sponge method for introducing an analyte compound.

### Example 4: Introduction of analyte into crystalline ZnCl₂-tpt polynuclear metal complex with a mixture of acetone and cyclohexane as solvent.

1 µg of Daidzein (7-hydroxy-3-(4-hydroxyphenyl)-4H-chromen-4-one) is dissolved in 1 µL DME and added to a crystalline sponge of ZnCl₂-tpt in a mixture of 25 µL cyclohexane and 25 µL acetone in a screw top vial with conical inset bottom. The vial is closed with a septum cap, an 0.8 mm needle is inserted and the vial placed in an incubator at 50 °C for approx. 22 h until the solvent has completely evaporated.

A sufficient amount of the analyte was introduced into the crystalline sponge as confirmed by a successful structure elucidate by X-ray crystallography.

### Example 5: Introduction of analyte into crystalline ZnCl₂-tpt polynuclear metal complex with a mixture of THF and cyclohexane as solvent.

1 µg of Daidzein (7-hydroxy-3-(4-hydroxyphenyl)-4H-chromen-4-one) is dissolved in 1 µL DME and added to a crystalline sponge of ZnCl₂-tpt in a mixture of 25 µL cyclohexane and 25 µl THF in a screw top vial with conical inset bottom. The vial is closed with a septum cap, an 0.8 mm needle is inserted and the vial placed in an incubator at 50 °C for approx. 22 h until the solvent has completely evaporated.

A sufficient amount of the analyte was introduced into the crystalline sponge as confirmed by a successful structure elucidate by X-ray crystallography.

## Claims

1. A solvated crystalline polynuclear metal complex, wherein the solvated polynuclear metal complex is represented by [[M(X)₂]₃(L)₂]ₙ · (Sol)ₚ wherein
M is a metal ion,
X is a monovalent anion,
L is a tridentate ligand represented by formula (1), 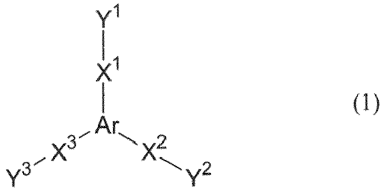
wherein Ar is a substituted or unsubstituted trivalent aromatic group, X¹ to X³ are independently a divalent organic group, or a single bond that directly bonds Ar and Y¹, Y², or Y³, and Y¹ to Y³ are independently a monovalent organic group having a coordinating moiety,
n is an arbitrary natural number, and
p is an arbitrary number,
wherein the amount of solvation of the polynuclear metal complex represented by the value p is such that p has a value between 0.5 to 6 and wherein solvent of solvation is a polar solvent or mixture of polar and non-polar solvents.

2. The solvated crystalline polynuclear metal complex of claim 1, wherein p has a value between 0.5 to 4.

3. The solvated crystalline polynuclear metal complex of claim 2, wherein p has a value between 1 and 3.

4. The solvated crystalline polynuclear metal complex of any one of the preceding claims, wherein the solvated polynuclear metal complex is [(ZnX₂)₃(tpt)₂]ₙ · (Sol)ₚ.

5. The solvated crystalline polynuclear metal complex of claim 4, wherein the solvated polynuclear metal complex is [(ZnCl₂)₃(tpt)₂]ₙ · (Sol)ₚ or [(Znl₂)₃(tpt)₂]ₙ · (Sol)ₚ.

6. The solvated crystalline polynuclear metal complex of any of the preceding claims, wherein the polynuclear metal complex has a porous structure.

7. The solvated crystalline polynuclear metal complex of any of the preceding claims, wherein X is a halogen selected from the group consisting of CI, Br, and I.

8. The solvated crystalline polynuclear metal complex of any one of the preceding claims, wherein the solvated polynuclear metal complex is obtained by a method comprising the steps of:
a) layering a volume of a lower alcohol onto a solution of ligand L in a mixture of an organic (nonpolar) solvent and the lower alcohol,
b) layering onto the volume of lower alcohol of step a) a solution of MX₂ in a lower alcohol,
c) obtaining a crystalline material after maintaining the solution obtained in step b) for a period of 1 to 10 days, preferably 3 to 7 days, at a temperature of 15°C to 40°C, preferably at 20°C to 30°C, and
d) washing the crystalline material of step c) with an organic polar solvent or mixture of non-polar and polar organic solvent.

9. The solvated crystalline polynuclear metal complex of any one of claims 1 to 7, wherein the solvated polynuclear metal complex is obtained by a method exchanging the non-polar solvent of solvation of a crystalline polynuclear metal complex with a polar or mixture of polar and non-polar solvents comprising: washing the non-polar solvent solvated crystalline polynuclear metal complex with a polar solvent or with a mixture of polar and non-polar solvent.

10. The solvated crystalline polynuclear metal complex of any of the preceding claims, wherein the polar solvent or mixture of non-polar and polar organic solvent is selected from acetone, THF, DCM, a mixture of acetone and a non-polar organic solvent, a mixture of THF and a non-polar organic solvent and a mixture of DCM and a non-polar organic solvent.

11. The solvated crystalline polynuclear metal complex of claim 10, wherein the mixture of acetone or THF or DCM and a non-polar organic solvent is a mixture of 30-80 volume % of acetone or THF or DCM mixed with 70-20 volume % of a non-polar organic solvent.

12. The solvated crystalline polynuclear metal complex of claim 11, wherein the mixture of acetone or THF and a non-polar organic solvent is a mixture of 50 volume % acetone or THF mixed with 50 volume % of a non-polar organic solvent.

13. The solvated crystalline polynuclear metal complex of any preceding claim, wherein the non-polar solvent is selected from n-hexane and cyclohexane.

14. A method of producing a crystal structure analysis sample, comprising bringing the polar solvated single crystal polynuclear metal complex according to any one of claims 1 to 13 into contact with an analysis target compound (analyte) containing solution to arrange molecules of an analyte in the pores and/or voids of the polar solvated single crystal polynuclear metal complex in an ordered manner.

15. A method for determining a molecular structure of an analysis target compound, comprising performing crystal structure analysis using a crystal structure analysis sample obtained by a method for producing the crystal structure analysis sample according to claim 14.

16. A method of preparing a solvated crystalline polynuclear metal complex solvated with a polar solvent or a mixture of polar and non-polar solvent comprising the steps of:
a) layering a volume of methanol onto a solution of ligand L in a mixture of an organic (nonpolar) solvent and a lower alcohol,
b) layering onto the volume of the lower alcohol of step a) a solution of MX₂ in a lower alcohol,
c) obtaining a crystalline material after maintaining the solution obtained in step b) for a period of 1 to 10 days, preferably 3 to 7 days at a temperature of 15°C to 40°C, preferably at 20°C to 30°C, and
d) washing the crystalline material of step c) with a polar solvent or mixture of non-polar and polar solvent.

17. A method of preparing a solvated crystalline polynuclear metal complex solvated with a polar solvent or a mixture of polar and non-polar solvent comprising washing a non-polar solvent solvated crystalline polynuclear metal complex with a polar solvent or with a mixture of polar and non-polar solvent.

18. The method of claim 16 or 17, wherein the polar solvent or mixture of non-polar and polar organic solvent is selected from acetone, THF, DCM a mixture of acetone and a non-polar organic solvent and a mixture of THF and a non-polar organic solvent and DCM and a mixture of a non-polar organic solvent.

19. The method of claim 18, wherein the mixture of acetone or THF and a non-polar organic solvent is a mixture of 30-70 volume % of acetone or THF mixed with 70-30 volume % of a non-polar organic solvent.

20. The method of claim 19, wherein the mixture of acetone or THF and a non-polar organic solvent is a mixture of 50 volume % acetone or THF mixed with 50 volume % of a non-polar organic solvent.

21. The method of any of claims 16 to 20, wherein the non-polar solvent is selected from n-hexane and cyclohexane.

22. A method of producing a crystal structure analysis sample, comprising bringing into contact;
a) a single crystal polynuclear metal complex represented by [[M(X)₂]₃(L)₂]ₙ in a solvent which is a polar solvent or a mixture of polar and a non-polar organic solvent, wherein
M is a metal ion,
X is a monovalent anion,
L is a tridentate ligand represented by formula (1), 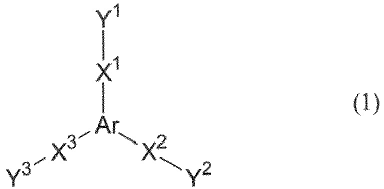
wherein Ar is a substituted or unsubstituted trivalent aromatic group, X¹ to X³ are independently a divalent organic group, or a single bond that directly bonds Ar and Y¹, Y², or Y³, and Y¹ to Y³ are independently a monovalent organic group having a coordinating moiety, and
n is an arbitrary natural number,
with
b) an analysis target compound (analyte) containing solution,
to arrange molecules of an analyte in the pores and/or voids of the single crystal polynuclear metal complex in an ordered manner.

23. The method of claim 22, wherein the polar solvent or mixture of non-polar and polar organic solvent is selected from acetone, THF, DCM, a mixture of acetone and a non-polar organic solvent and a mixture of THF and a non-polar organic solvent and a mixture of DCM and a non-polar organic solvent.

24. The method of claim 23, wherein the mixture of acetone or THF and a non-polar organic solvent is a mixture of 30-80 volume % of acetone or THF mixed with 70-20 volume % of a non-polar organic solvent.

25. The method of claim 24, wherein the mixture of acetone or THF and a non-polar organic solvent is a mixture of 50 volume % acetone or THF mixed with 50 volume % of a non-polar organic solvent.

26. The method of any of claims 22 to 25, wherein the non-polar solvent is selected from n-hexane and cyclohexane.

27. A method for determining a molecular structure of an analysis target compound, comprising performing crystal structure analysis using a crystal structure analysis sample obtained by a method for producing the crystal structure analysis sample according to any of claims 22 to 26.
